# EUROPÄISCHE PATENTSCHRIFT

(11) **EP 0 934 217 B1**
(45) Veröffentlichungstag und Bekanntmachung des Hinweises auf die Patenterteilung: **01.08.2001**
(21) Anmeldenummer: 97913099.4
(22) Anmeldetag: 08.10.1997
(51) Int. Cl.: B65G 47/84, B65G 47/46

(54) **FÖRDERSYSTEM UND VERFAHREN FÜR DIE SORTIERUNG VON STÜCKGUT, INSBESONDERE VON PAKETEN, PÄCKCHEN ODER BEHÄLTERN**
CONVEYOR SYSTEM AND METHOD FOR SORTING ARTICLES, SPECIALLY PARCELS, PACKAGES OR CONTAINERS
SYSTEME DE TRANSPORT ET PROCEDE POUR LE TRIAGE D'ARTICLES ISOLES, EN PARTICULIER, DE COLIS OU DE CONTENEURS

(30) Priorität: 08.10.1996 US 28012 P; 03.10.1997 US 943422
(43) Veröffentlichungstag der Anmeldung: 11.08.1999
(73) Patentinhaber: Atecs Mannesmann AG, 40213 Düsseldorf (DE)
(72) Erfinder: SHEARER, James, T., Jr., Ada, MI 49301 (US)
(74) Vertreter: Meissner, Peter E., Dipl.-Ing.
(86) Internationale Anmeldenummer: DE9702361
(87) Internationale Veröffentlichungsnummer: WO9815481

(56) Entgegenhaltungen:
- US-A- 5 038 912
- US-A- 5 165 515

## Beschreibung

Die Erfindung betrifft ein Fördersystem für die Sortierung von Stückgut, insbesondere von Paketen, Päckchen oder Behältern gemäß Anspruch 1 und Verfahren für die Sortierung von Stückgut gemäß den Ansprüchen 10 und 12.

Derartige Fördersysteme weisen vorzugsweise eine endlos umlaufende Förderfläche auf, die aus einer Vielzahl von Förderflächenteilen gebildet sind. Die Förderflächenteile erstrecken sich quer zur Förderrichtung und sind parallel zueinander sowie voneinander beabstandet angeordnet. An jedem Förderflächenteil ist ein Abschiebeelement quer zur Förderrichtung verschiebbar gelagert, über die die auszuschleusenden Stückgutteile von der Förderfläche seitlich abgeschoben werden können, während diese in Förderrichtung des Fördersystems gefördert werden. Durch die seitliche Abschiebebewegung können die Fördergutteile von einem Hauptförderer des Fördersystems auf einen angrenzenden Abzweigförderer oder einen anderen Aufnahmeförderer abgeschoben werden.

Diese Art von Fördersystemen für die Sortierung von Stückgut mit einer aus einer Vielzahl von parallel zueinander angeordneten Förderflächenteilen gebildeten und an zwei parallel zueinander verlaufenden endlosen Ketten befestigten Förderfläche ist seit vielen Jahren bekannt. Diese Fördersysteme benutzen entlang der Förderflächenteile bewegbare Abschiebeelemente für das seitliche Abschieben der Stückgutteile von der Förderfläche. Hierzu werden die Abschiebeelemente von einem Netz aus Führungs- und Abschiebeschienen geführt. Dieses Schienennetz ist im allgemeinen unterhalb des Obertrums der als Kette umlaufenden Förderflächenteile angeordnet und jedes Abschiebeelement weist ein nach unten sich erstreckendes Führungselement auf, das in die Schienen eingreift. Desweiteren sind in dem Schienennetz Abschiebeweichen angeordnet, um die Abschiebeelemente von den parallel zur Förderrichtung und unterhalb der seitlichen Randbereiche der Förderflächen verlaufenden Führungsschienen auf eine hiervon ausgehend schräg zur Förderrichtung verlaufende Abschiebeschiene umzuleiten, mit dem Ziel, eine seitliche Bewegung des Abschiebeelementes während dessen Bewegung in Förderrichtung zu erreichen. Um den Abstand zwischen den Stückgutteilen mit unterschiedlichen Längen minimieren zu können, weisen derartige Fördersysteme am Eingang des Fördersystems angeordnete manuelle oder automatische Meßsysteme für die Bestimmung der Länge der Stückgutteile auf, deren Meßsignale zur Steuerung der Abschiebeweichen benutzt werden, um in Abhängigkeit der Länge des Stückgutteils nur eine entsprechende Anzahl von Abschiebeelementen für das Abschieben des Stückgutteils zu benutzen. Derartige Fördersysteme für die Sortierung von Stückgut sind aus den US-Patenten Nr. 3,361,247 und Nr. 4,738,347 bekannt.

Im Zuge von steigenden Anforderungen an den Durchsatz von Stückguttteilen bei derartigen Fördersystemen ist zunehmend der Abstand zwischen den geförderten Stückgutteilen als kritische Auslegungsgröße bei der Planung von derartigen Fördersystemen zu beachten. Ein Herabsetzen des Abstandes zwischen den zu sortierenden Stückgutteilen ermöglicht eine Erhöhung der Durchsatzleistung des Fördersystems. Aus dem US-Patent Nr. 5,038,912 ist bereits ein Fördersystem für die Sortierung von Stückgut bekannt, das eine einzige schräg zur Förderrichtung des Hauptförderers verlaufende und unterhalb der Förderfläche angeordnete Abschiebeschiene aufweist, die parallel zur Förderrichtung des sich an den Hauptförderer anschließenden Abzweigförderers ausgerichtet ist. Auch hier erfolgt eine Bestimmung der Länge der Stückgutteile über Sensoren, während diese sich entlang des Hauptförderes bewegen. Wenn ein Stückgutteil einen Abschiebebereich erreicht, wird eine Abschiebeweiche betätigt, die die Führungselemente der Abschiebeelemente von den Führungsschienen in Richtung der Abschiebeschiene leitet. Die Abschiebeweiche verbleibt in dieser Stellung, bis eine der Länge des Stückgutteils entsprechende Anzahl von Abschiebeeiementen auf die Abschiebeschiene umgeleitet ist, so daß ein zuverlässiges Abschieben des Stückgutteils möglich ist. Nach dem ausreichend Abschiebeelemente auf die Abschiebeschiene umgeleitet sind, wird die Abschiebeweiche in ihre Ruhestellung zurückbewegt und die nachfolgenden Abschiebeelemente werden weiter in den Führungsschienen und somit entlang einer Längsseite der Förderfläche des Hauptförderers geführt. In dieser Stellung werden die angrenzend neben den Abschiebeelemente auf den Förderflächenteilen geförderten Stückgutteile nicht abgeschoben.

Dieses Fördersystem benötigt jedoch einen systembedingten Mindestabstand zwischen den einzelnen Stückgutteilen, da die Stückgutteile von den Abschiebeelementen während der Abschiebebewegung in Richtung des Abzweigförderers gedreht werden. Aufgrund dieser Drehbewegung wird ein zusätzlicher Abstand zwischen den aufeinanderfolgenden Stückgutteilen benötigt, um Berührungen zwischen dem abzuschiebenden Stückgutteil und dem dicht auf dem Hauptförderer folgenden Stückgutteil zu vermeiden. Als Folge der Drehbewegung wird die effektive Länge der Stückgutteile dadurch erhöht, daß die hintere Ecke des abzuschiebenden Stückgutteils um einen Abstand C in Richtung des nachfolgenden Stückgutteils bewegt wird. Dieser Abstand kann anhand der Breite W des abzuschiebenden Stückgutteils und dem Winkel Θ, der durch die Ausrichtung der Förderrichtung des Hauptförderers und der Förderrichtung des Abzweigförderers zueinander bestimmt ist, berechnet werden. Der Abstand C beträgt somit W sinΘ. Für ein derartiges Fördersystem ist es daher notwendig, daß die aufeinanderfolgenden und abzuschiebenden Stückgutteile keinen geringeren Abstand als W sinΘ zueinander aufweisen.

Beispielsweise wird bei Anordnung eines Abzweigförderers unter einem Winkel Θ von 20° zu dem Hauptförderer und einer Breite der Stückgutteile von etwa 0,4 m (16 inches) eine effektive Verlängerung der Stückgutteile um etwa 0,14 m (5,5 inches) bedingt. Für den Fall, daß ein Stückgutteil etwa 0,6 m (24 inches) lang ist bedeutet dies ein Ansteigen der effektiven Länge um nahezu 23 %. Dementsprechend würde ein Fördersystem für die Sortierung von Stückgut, das ohne Abstand zueinander geförderte Stückgutteile abschieben könnte, einen um etwa 23 % erhöhten Durchsatz an Stückgutteilen aufweisen, ohne hierbei die Fördergeschwindigkeit zu erhöhen.

Eine weitere Art Stückgüter zu sortieren und hierbei den Abstand zwischen den aufeinanderfolgenden Stückgutteilen zu reduzieren, ist in dem US-Patent Nr. 5,165,515 beschrieben. Dieses Fördersystem erhöht die Durchsatzleistung dadurch, daß es die abzuschiebenden Stückgutteile nicht dreht sondern parallel zur Förderrichtung des Hauptförderers abschiebt. Hierfür sind je Abzweigförderer eine Vielzahl von schräg zur Förderrichtung des Hauptförderers sowie parallel zueinander verlaufende Abschiebeschienen vorzusehen, anstatt der einzigen Abschiebeschiene nach dem zuvor beschriebenen Stand der Technik. Jede der parallelen Abschiebeschienen ist mit einer eigenen Abschiebeweiche versehen, die betätigt wird, um die Abschiebeelemente aus der Förderrichtung des Hauptförderers in die seitliche Abschiebebewegung umzuleiten. Durch das simultane Umschalten von mehr als einer Abschiebeweiche kann eine Gruppe von aufeinanderfolgenden Abschiebeelementen gleichzeitig seitlich über die Förderfläche des Hauptförderers geführt werden. Die Anzahl der Abschiebeelemente entspricht etwa der gemessenen Länge der Stückgutteile. Da diese Gruppe von Abschiebeelementen an nahezu der gesamten Länge des Stückgutteils angreift, wird dieses Stückgutteil bei der Abschiebebewegung in Richtung des Abzweigförderers nicht gedreht. Ohne Drehung der Stückgutteile wird der mögliche Abstand zwischen den aufeinanderfolgenden Stückgutteilen minimiert.

Dieses Fördersystem ist jedoch nicht ohne Probleme, da die Stückgutteile nicht gedreht werden und somit immer noch parallel zur Förderrichtung des Hauptförderers ausgerichtet auf den Abzweigförderer abgeschoben werden. Somit sind die Stückgutteile schräg zur Förderrichtung des Abzweigförderers angeordnet, d. h. ihre Längsseiten sind nicht parallel zu der Förderrichtung des Abzweigförderers ausgebildet. Durch diese Ausrichtung muß der Abzweigförderer in einer größeren Breite ausgebildet werden. Diese Ausbildung geht einher mit einem Ansteigen der Kosten für den Abzweigförderer. Dieses Fördersystem bereitet eine weitere Schwierigkeit, da aus Redundanzgründen je Abzweigförderer die Gruppe von Abschiebeweichen und den zugeordneten Abschiebeschienen in doppelter Ausführung bereitgestellt werden müssen und somit der Kostenaufwand für ein derartiges Fördersystem weiter steigt.

Der vorliegenden Erfindung liegt die Aufgabe zugrunde, ein Fördersystem und ein Verfahren für die Sortierung von Stückgut, insbesondere von Paketen, Päckchen oder Behältern, zu schaffen, die eine Förderung der abzuschiebenden Stückgüter mit möglichst geringem Abstand untereinander bei gleichzeitig geringem konstruktiven Aufwand für das Fördersystem ermöglichen.

Diese Aufgabe wird bei einem Fördersystem für die Sortierung von Stückgut, insbesondere von Paketen, Päckchen oder Behältern durch die im Anspruch 1 aufgeführten Merkmale gelöst. Verfahren für die Sortierung von Stückgut zur Lösung dieser Aufgabe sind in den Ansprüchen 10 und 12 angegeben. Vorteilhafte Ausgestaltungen der Erfindung sind in den Unteransprüchen 2 bis 9 sowie 11, 13 und 14 angegeben.

Erfindungsgemäß wird für das Fördersystem für die Sortierung von Stückgut eine erhöhte Durchsatzleistung durch eine Reduzierung der Abstände zwischen den aufeinanderfolgenden Stückgutteilen erreicht. Diese Durchsatzerhöhung wird erreicht ohne Erhöhung der Antriebsleistung, der Lärmentwicklung oder der Fördergeschwindigkeit des Hauptförderers. Die Erhöhung der Durchsatzleistung wird allein dadurch erreicht, daß ein paar Abschiebeschienen und diesen zugeordnete Abschiebeweichen derart ausgebildet und gesteuert werden, so daß die Vorteile eines Fördersystems mit einer Vielzahl von parallel nebeneinander verlaufender Abschiebeschienen genutzt werden können.

Vorteilhafterweise wird bei dem Verfahren für die Sortierung von Stückgut das Steuersystem für die Abschiebeweichen in Abhängigkeit der gemessenen Länge der Stückgutteile und für eine vorbestimmte Zeit in Abhängigkeit der Länge der Stückgüter betätigt. Für die Bestimmung der Länge der Stückgutteile sind entlang des Hauptförderers und stromaufwärts vor dem Abzweigförderer Sensoren angeordnet, die mit dem Steuersystem verbunden sind. Das Steuersystem vergleicht die gemessene Länge der Stückgutteile mit einer ersten vorbestimmten Länge. Stückgutteile, die eine kleinere Länge als die erste vorbestimmte Länge aufweisen, werden unter Benutzung einer einzelnen Abschiebeweiche abgeschoben. Die Anzahl der Abschiebeelemente, die von dieser Abschiebeweiche in die Abschiebeschiene umgeleitet werden, ist abhängig von der Länge des Stückgutteils. Stückgutteile, die eine Länge aufweisen, die größer ist als die erste vorbestimmte Länge aber kleiner ist als eine zweite vorbestimmte Länge, werden unter Verwendung von zwei Abschiebeweichen abgeschoben. In dieser Betriebsweise wird nur jeweils ein Abschiebeelement von jeder Abschiebeweiche umgeleitet. Stückgutteile, die eine Länge größer als die zweite vorbestimmte Länge aufweisen, werden wiederum nur unter Zuhilfenahme einer einzelnen Abschiebeweiche abgeschoben. Auch hier werden soviele Abschiebeelemente von der Abschiebeweiche umgeleitet, so daß das Stückgutteil entlang seiner gesamten Längsseite von Abschiebeelementen geschoben wird. Die vorliegende Erfindung bietet eine Vielzahl der Vorteile der zuvor im Stand der Technik beschriebenen parallelen Abschiebetechnik, wobei gleichzeitig das vorliegende Verfahren kostengünstiger und konstruktiv einfacher verwirklichbar ist.

In weiterer Ausgestaltung der Erfindung ist ein Paar von Abschiebeschienen vorgesehen und zwar eine erste stromaufwärts gelegene und eine mit Abstand hierzu angeordnete zweite stromabwärts gelegene Abschiebeschiene, in die die Führungselemente der Abschiebeelemente eingreifen und die schräg zur Förderrichtung des Hauptförderers unterhalb dessen Förderfläche verlaufen. Anhand von zwei Abschiebeelementen, die gleichzeitig in die Abschiebeschienen umgeleitet worden sind, kann ein Stückgutteil parallel zur Hauptförderrichtung des Hauptförderers schräg in Richtung des Abzweigförderers abgeschoben werden. Um die Stückgutteile vor der Übergabe an den Abzweigförderer in Richtung des Abzweigförderers drehen zu können, ist die erste Abschisbeschiene im letzten Abschnitt auf die zweite Abschiebeschiene zulaufend ausgebildet. In besonderer Ausgestaltung ist die zweite Abschiebeschiene auf ihrer gesamten Länge gerade ausgebildet, während die erste Abschiebeschiene nur in ihrem ersten Bereich gerade und in ihrem hieran anschließenden zweiten Bereich gekrümmt ausgebildet ist. Bei dieser Ausbildung verläuft der erste Abschnitt der ersten Abschiebeschiene zunächst im wesentlichen parallel zu der zweiten Abschiebeschiene und der zweite gekrümmte Abschnitt der ersten Abschiebeschiene beginnt etwa in der Mitte der ersten Abschiebeschiene und ist derartig gekrümmt, daß der zweite Abschnitt der ersten Abschiebeschiene auf das Ende der zweiten Abschiebeschiene zuläuft. in einer alternativen Ausführungsform kann die erste Abschiebeschiene aus zwe winklig zueinander angeordneten Abschnitten gebildet sein, wobei der erste Abschnitt parallel zu der zweiten Abschiebeschiene verläuft und der zweite Abschnitt auf das Ende der zweiten Abschiebeschiene zuläuft. In einer dritten Ausführungsform endet der erste Abschnitt der ersten Abschiebeschiene etwa in der Mitte der Förderfläche und von hier aus wird das Abschiebeelement in Förderrichtung des Hauptförderers zu der zweiten Abschiebeschiene geführt.

Um ein Stückgutteil abzuschieben, wird ein Paar von Abschiebeelementen von den Führungsschienen auf die Abschiebeschienen umgeleitet, wobei ein Abschiebeelement von der ersten Abschiebeschiene und ein weiteres Abschiebeelement von der zweiten Abschiebeschiene geführt werden. Während das Abschiebeelement von dem ersten geraden Abschnitt der ersten Abschiebeschiene geführt wird, sind beide Abschiebeelemente mit ihren Kontaktflächen zu den Stückgutteilen parallel zur Förderrichtung des Hauptförderes ausgerichtet und schieben somit das Stückgutteil seitlich und parallel zur Förderrichtung des Hauptförderers, ohne dieses hierbei zu drehen. Nachdem das Abschiebeelement der ersten Abschiebeschiene den Übergangspunkt zwischen dem ersten und dem zweiten Abschnitt passiert hat und somit in den zweiten gekrümmten Abschnitt eingefahren ist, sind die beiden Abschiebeelemente nicht länger parallel zur Förderrichtung der Hauptförderbahn ausgerichtet. Vielmehr wird das Stückgutteil durch die weiterhin kontinuierliche seitliche Abschiebebewegung des Abschiebeelementes der zweiten Abschiebeschiene in Richtung der Abzweigförderbahn gedreht. Diese Drehbewegung findet solange statt bis das Stückgutteil mit einer seiner Längsseiten parallel zur Förderrichtung des Abzweigförderers ausgebildet ist.

Der erste gerade Abschnitt der ersten Abschiebeschiene verzögert den Beginn der Drehbewegung des Stückgutteils in Richtung des Abzweigförderers bis zu einem Zeitpunkt, bis daß das Stückgutteil zumindest teilweise seitlich von dem Hauptförderer abgeschoben ist. Durch die verzögerte Drehung der Stückgutteile werden mögliche Berührungen der abzuschiebenen Stückgutteile mit den anschließend auf dem Hauptförderer geförderten Stückgutteilen vermindert. Der Grad der Berührungen zwischen zwei Stückgutteilen ist abhängig von der Länge der Verzögerung und der Breite des nachfolgenden Stückgutteils. Wenn ein Stückgutteil gedreht und somit mit ihren Längsseiten parallel zur Förderrichtung des Abzweigförderers ausgerichtet wird, bewegt sich eine der beiden hinteren Ecken in Richtung des nachfolgenden Stückgutteils. Wenn das nachfolgende Stückgutteil eine kleinere Breite aufweist kann das abzuschiebende Stückgutteil in Richtung des Abzweigförderers ausgerichtet werden, ohne daß das nachfolgende Stückgutteil berührt wird. Durch die spätere Einleitung des Drehvorgangs werden im übertragenen Sinne die nachfolgenden Stückgutteile schmaier und der Abstand zwischen den Stückgutteilen kann minimiert werden.

Die Erfindung wird nachfolgend anhand von vier in Zeichnungen dargestellten Ausführungsbeispielen näher beschrieben. Es zeigen:
- Figur 1: eine Draufsicht auf ein Fördersystem für die Sortierung von Stückgut,
- Figur 2: ein Fördersystem gemäß Figur 1 mit aufgebrochener Darstellung im Bereich der Abschiebeschienen,
- Figur 3: eine Draufsicht auf den Übergangsbereich zwischen einem Zuführförderer und einem Hauptförderer des Fördersystems,
- Figur 4: ein Blockschaltbild eines Kontrollsystems,
- Figur 5: ein Flußdiagramm für die Steuerung des Fördersystems,
- Figuren 6a-c: schematische Draufsichten auf ein Fördersystem zur Erläuterung des Flußdiagramms nach Figur 5,
- Figur 7: eine Draufsicht auf ein Fördersystem in einer ersten alternativen Ausführung,
- Figur 8: eine Draufsicht auf ein Fördersystem gemäß Figur 7 mit aufgebrochener Darstellung im Bereich der Abschiebeschienen,
- Figur 9: eine Draufsicht auf das Fördersystem in einer zweiten alternativen Ausführung mit aufgebrochener Darstellung im Bereich der Abschiebeschienen,

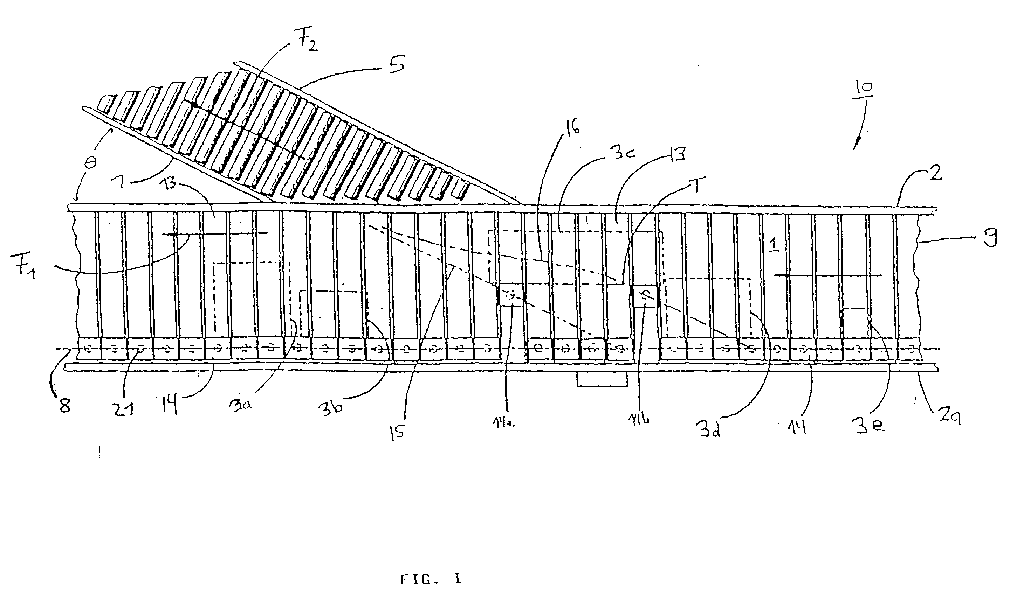

- Figur 1'0: eine Draufsicht auf ein Fördersystem in einer dritten alternativen Ausführung mit aufgebrochener Darstellung im Bereich der Abschiebeschienen,

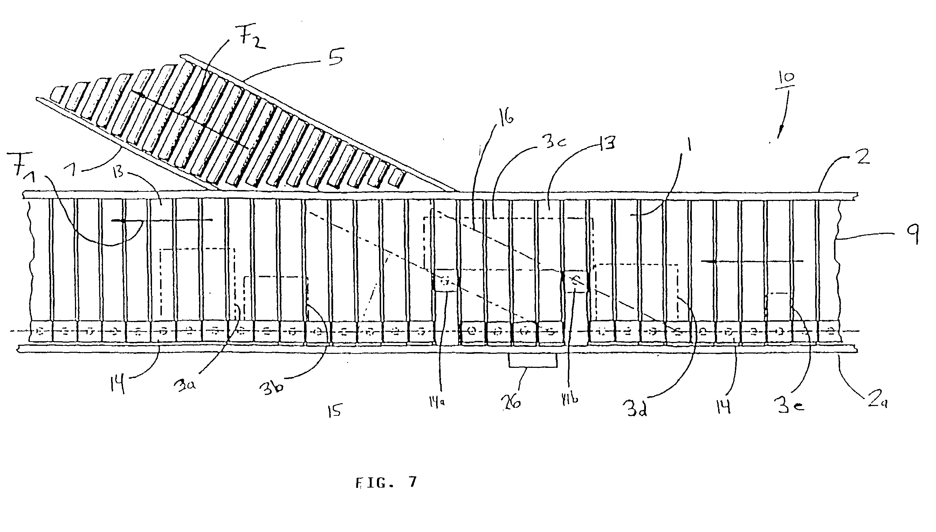

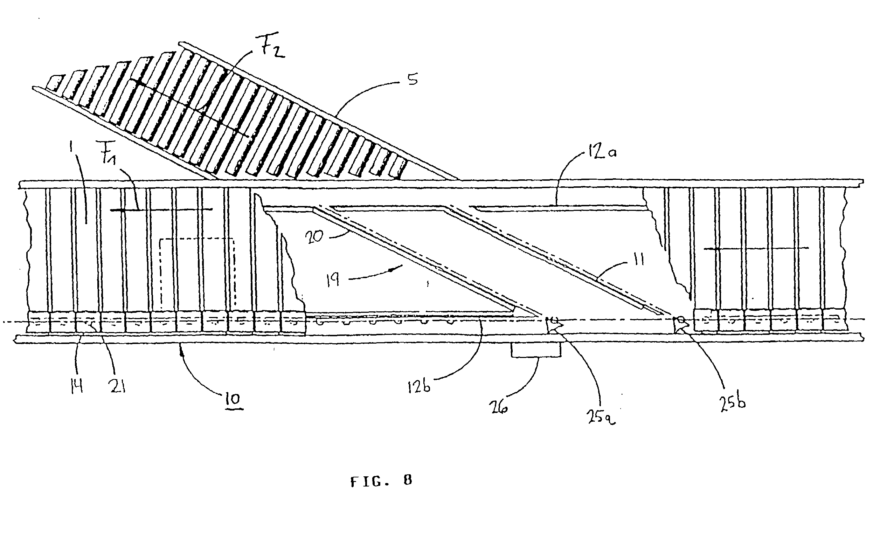

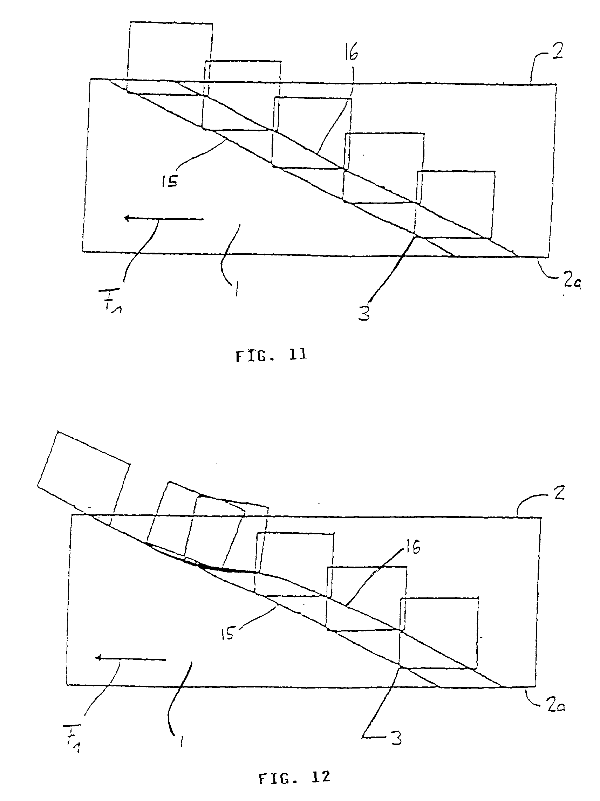

- Figur 11: eine schematische Darstellung eines Abschiebevorgangs eines Stückgutteils in einem Fördersystem gemäß den Figuren 7 und 8 und

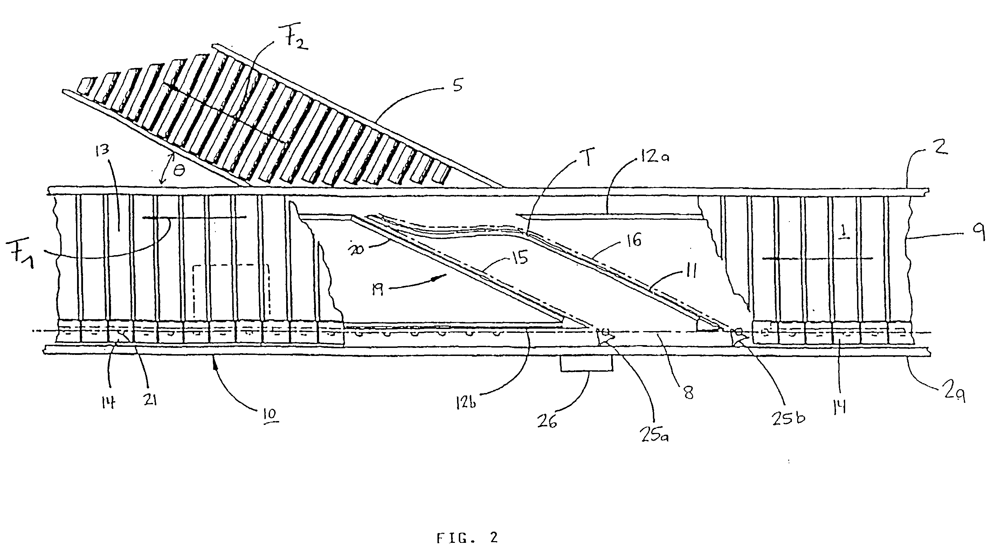

- Figur 12: eine schematische Darstellung eines Abschiebevorgangs eines Stückgutteils in einem Fördersystem gemäß den Figuren 1 und 2.

Die Figur 1 zeigt eine Draufsicht auf ein Fördersystem 10 für die Sortierung von Stückgutteilen 3a-e, das im wesentlichen aus einem Hauptförderer 9 und mindestens einem Abzweigförderer 5 besteht. Der Abzweigförderer 5 ist seitlich an den Hauptförderer 9 angrenzend und unter einem Winkel Θ zu diesem angeordnet. Die Pfeile F₁ und F₂ zeigen die Förderrichtung für den Hauptförderer 9 und den Abzweigförderer 5 an.

Der Hauptförderer 9 weist eine Förderfläche 1 auf, die aus einer Vielzahl von Förderflächenteilen 13 gebildet ist. Die in der Draufsicht rechteckig ausgebildeten Förderflächenteile 13 sind mit ihrer Längserstreckung rechtwinklig zur Förderrichtung F₁ des Hauptförderers ausgebildet und jeweils an ihren Enden in schienenförmigen Seitenrahmenelementen 2 und 2a geführt. Die Einzelheiten der Verbindung bezüglich der Förderflächenteile 13 untereinander zur Bildung einer umlaufenden Kette sind im einzelnen in dem US-Patent Nr. 5,127,510 näher erläutert, auf dessen Offenbarung hiermit Bezug genommen und daher nicht wiederholt wird.

Eine Reihe von Abschiebeelementen 14 sind entlang der dem Abzweigförderer 5 gegenüberliegenden Längsseite des Hauptförderers 9 an den Föderflächenteilen 13 angeordnet. Wenn die Abschiebeelemente 14 zeitweilig nicht benutzt werden, um Stückgutteile 3 von dem Hauptförderer 9 auf den Abzweigförderer 5 abzuschieben, werden diese über ein auf ihrer Unterseite angeordnetes Führungselement 21 in einer unterhalb der Förderflächenteile 13 angeordneten Führungsschiene 12b entlang einer Längsseite der Förderfläche 1 verlaufenden Führungsbahn 8 geführt. Die Führungselemente 21 erstrecken sich nach unten in Richtung der Führungsschiene 12b, die die Aufgabe hat, die Abschiebeelemente 14 daran zu hindern, sich selbständig quer über die Förderfläche 1 zu bewegen mit Ausnahme des Bereiches mit dem angrenzenden Abzweigförderer 5. Im Bereich des Abzweigförderers 5 sind im Verlauf der Führungsschiene 12b Abschiebeweichen 25a und 25b angeordnet. Diese Abschiebeweichen 25a und 25b sind in allen Anschlußbereichen zwischen einem Hauptförderer 9 und einem Abzweigförderer 5 vorgesehen. Desweiteren sind Mittel vorgesehen, um die Abschiebeelemente 14a und 14b nach erfolgter Abschiebebewegung schräg über die Förderfläche 1 auf die gegenüberliegende Ausgangsseite des Hauptförderers 9 zurückzuführen. Diese Mittel sind in Zeichnungen nicht gezeigt und im Rahmen der vorliegenden Erfindung nicht näher zu betrachten. Der Abschiebeschuh 14b wird von einer ersten in Förderrichtung F₁ gesehen stromaufwärts gelegenen Abschiebeschiene und das Abschiebeelement 14a von einer zweiten in Förderrichtung F₁ gesehen stromabwärts gelegenen zweiten Abschiebeschiene geführt.

Die Figur 2 zeigt eine der Figur 1 entsprechende Draufsicht auf ein Fördersystem 10, wobei im Anschlußbereich des Abzweigförderes 5 an den Hauptförderer 9 die Darstellung aufgebrochen ist, um die unterhalb der Förderfläche 1 angeordneten Bauteile zu zeigen. Der Figur 2 ist zu entnehmen, daß die Abschiebeweichen 25a und 25b im Verlauf der Führungsbahn 8 für die in Ruhestellung befindlichen Abschiebeelemente 14 sowie an der dem Abzweigförderer 5 angeordneten Längsseite des Hauptförderers 5 angeordnet sind. Die Abschiebeweichen 25a und 25b sind vorzugsweise nach der in dem US-Patent Nr. 5,038,912 beschriebenen Art ausgeführt, auf dessen Offenbarung hiermit bezug genommen wird. Die erste Abschiebeschiebe 11 ist in ihrem Verlauf in zwei Abschnitte unterteilt. Der erste Abschnitt der ersten Abschiebeschiene 11 verläuft parallel mit der zweiten Abschiebeschiene 15 und der zweite Abschnitt ist in Richtung der zweiten Abschiebeschiene 15 gekrümmt ausgeführt und trifft mit dieser an ihrem Ende zusammen. Wenn die erste Abschiebeweiche 25b in ihre Abschiebeposition geschaltet wird, werden die Abschiebeelemente 14 von der Führungsbahn 8 in Richtung der ersten Abschiebeschiene 11 umgeleitet. Für den Fall, daß die erste Abschiebeweiche 25b nicht in ihrer Abschiebeposition geschaltet ist und sich somit in ihrer Ruhestellung befindet, werden die Abschiebeelemente 14 über die erste Abschiebeweiche 25b hinweg weiter entlang der Längsseite des Hauptförderers 9 an der Führungsbahn 8 geführt, bis sie auf die zweite Abschiebeweiche 25a treffen. Über die zweite Abschiebeweiche 25a ist wiederum einerseits eine Umleitung der Abschiebeelemente 14 auf eine zweite Abschiebeschiene 20 oder eine weitere Führung entlang der Führungsbahn 8 in Abhängigkeit von dem Schaltungszustand der Abschiebeweiche 25a möglich.

In der Figur 1 sind 5 Stückgutteile 3a-3e mit verschiedenen Größen und unterschiedlichen rechteckigen Grundflächen hintereinander auf dem Hauptförderer 9 gezeigt. Das Stückgutteil 3c wird gerade von zwei Abschiebeelementen 14a und 14b von der Förderfläche 1 des Hauptförderes 9 in Richtung des Abzweigförderes 5 geschoben. Hierzu greifen die Abschiebeelemente 14a und 14b gleichzeitig an einer Längsseite und vorzugsweise in der Nähe ihrer Enden an dem Stückgutteil 3c an und schieben das Stückgutteil 3c im Bereich des ersten Abschnittes der ersten Abschiebeschiene 11 parallel zur Förderrichtung F₁ des Hauptförderers 9 in Richtung des Abzweigförderers 5. Das Stückgutteil 3c wird während dieses ersten Teils des Abschiebevorgangs nicht relativ zur Förderrichtung F₁ auf der Förderfläche 1 gedreht. Das in Förderrichtung F₁ folgende Stückgutteil 3d kann somit mit sehr geringem Abstand dem abzuschiebenden Stückgutteil 3c folgen. Während das Abschiebeelement 14b entlang des ersten Abschnittes der ersten Abschiebeschiene 16 geführt wird, bewegt es sich im wesentlichen parallel zu der zweiten Abschiebeschiene 15. Erst wenn das Abschiebeelement 14b den zweiten gekrümmten Abschnitt der ersten Abschiebeschiene 11 erreicht, beginnt dieses sich auf einer gekrümmten Bahn in Richtung der in Förderrichtung F₁ folgenden zweiten Abschiebeschiene 15 zu bewegen. Hierdurch wird wie in der folgenden Beschreibung noch näher erläutert wird das Stückgutteil 3c einer Rotationskraft in Richtung des Abzweigförderes 5 unterworfen, wenn der Abschiebeschuh 14b in den zweiten Abschnitt der ersten Abschiebeschiene 11 einfährt.

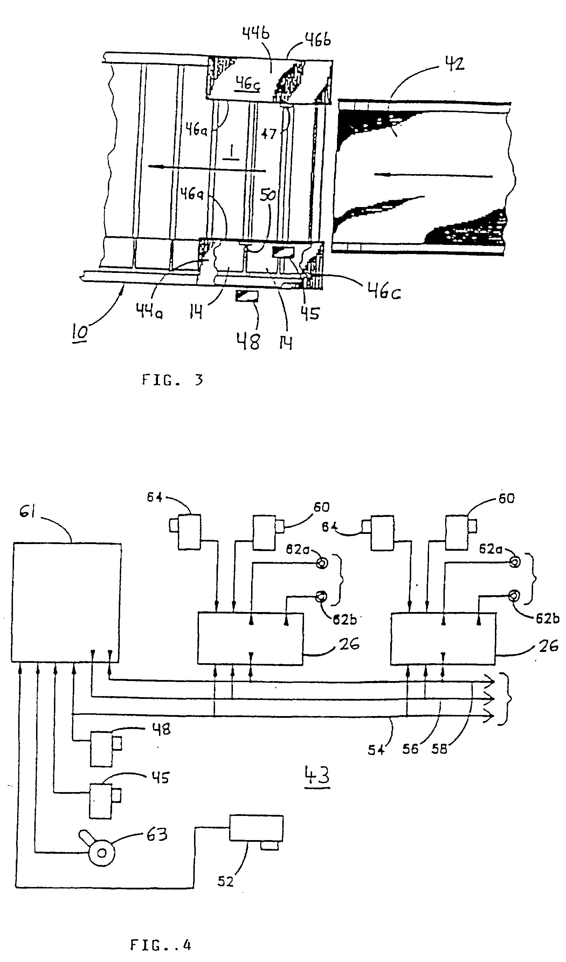

Das Fördersystem 10 weist ein Steuersystem 43 auf, das hardwaremäßig im wesentlichen mit dem in dem US-Patent Nr. 5,165,515 beschriebenen Steuersystem übereinstimmt, auf dessen Offenbarung hiermit ohne weitere Wiederholung Bezug genommen wird. Der Figur 3 ist zu entnehmen, daß die Stückgutteile 3 von einem als Rutsche ausgebildeten Zuführförderer 42 an den Anfang des Hauptförderes 9 übergeben werden. Im Bereich des Anfangs weist das Fördersystem 10 an seinen beiden Längsseiten jeweils ein Abdeckelement 44a und 44b auf. Jedes Abdeckelement 44a und 44b ist im Querschnitt und in Förderrichtung F₁ gesehen U-förmig ausgebildet und dessen Öffnung ist in Richtung der Förderfläche 1 gerichtet. Dementsprechend weist jedes Abdeckelement 44a und 44b eine innere vertikale Wandfläche 46a und eine äußere vertikale Wandfläche 46b auf, die über eine obere horizontale Wandfläche 46c miteinander verbunden werden. Ein Teil der oberen horizontalen Wandfläche 46c des Abdeckelements 44a ist aufgebrochen dargestellt, um die von dem Abdeckelement 44a umschlossenen Bauteile zu zeigen. Die Abdeckelemente 44a und 44b haben die Aufgabe zu verhindern, daß von dem Zuführförderer 42 auf den Hauptförderer 9 aufgegebene Teile nicht auf sondern neben die Abschiebeelemente 14 eingeschleust werden. Außerdem dienen die Abdeckelemente 44a und 44b zur Befestigung von Meßelementen. Somit ist an der Innenseite der Wandfläche 46b ein Abschiebeelement-Sensor 48 angeordnet, der mit einem auf der gegenüberliegenden Innenseite der inneren vertikalen Wandfläche 46a angeordneten Reflektor 50 zur Erkennung der Anwesenheit von Abschiebeelementen 14 zusammenarbeitet. Desweiteren ist ein Stückgutteil-Sensor 45 an der Wandfläche 46 des Abdeckelements 44a angeordnet, der mit einem auf der gegenüberliegenden Seite der Förderfläche 1 an der Außenseite der Wandfläche 46a des Abdeckelements 44b angeordneten Reflektor 47 zusammenarbeitet. Anhand des von dem Abschiebeelement-Sensors 48 ausgesandten und von dem Reflektor 50 reflektierten Lichtstrahls, der die Bewegungsbahn der Abschiebeelemente 14 innerhalb der Abdeckelemente 44a und 44b schneidet, sind bei bekannter Geometrie der Abschiebeelemente 14 deren Position, Geschwindigkeit und deren Anwesenheit auf der linken oder rechten Längsseite des Hauptförderers 9 zu ermitteln. Durch die spezielle Anordnung wird das Meßsignal des Abschiebeelement-Sensors 47 und des Reflektors 50 nicht von den auf der Förderfläche 1 geförderten Stückgutteilen 3 beeinträchtigt. Ein weiterer Lichtstrahl wird von dem Stückgutteil-Sensor 45 erzeugt, der von dem Reflektor 47 reflektiert wird. Hiermit können Meßwerte bezüglich der auf der Förderfläche 1 von dem Zuführförderer 42 aufgegebenen Stückgutteile 3 ermittelt werden, ohne daß die Meßsignale von der Bewegung der Abschiebeelemente 14 beeinträchtigt werden.

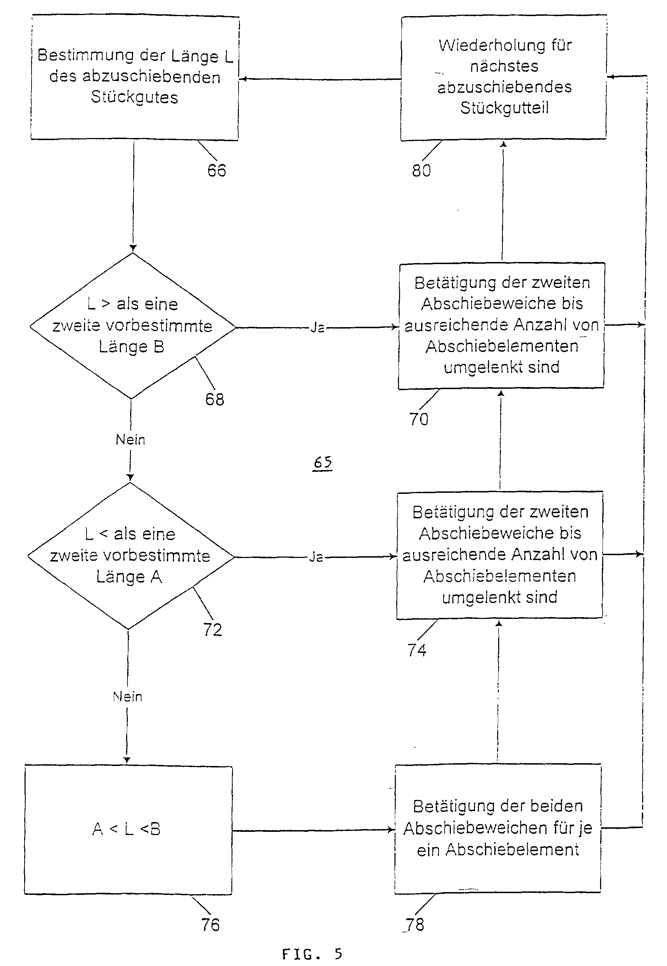

Die Meßsignale der Sensoren 45 und 48 werden an eine zentrale programmierbare Sortiersteuerung 61 weitergeleitet, die in Figur 4 dargestellt ist. Die Sortiersteuerung 61 erhält außerdem Eingangssignale von einem inkrementalen Meßwertaufnehmer 63, der Meßwerte bezüglich der Bewegung der Förderfläche 1 liefert. Mit Hilfe dieser 3 Eingangssignale ist die Sortiersteuerung 61 in der Lage die Länge, die Position und die Geschwindigkeit der Stückgutteile 3 zu bestimmen. An die Sortiersteuerung 61 werden außerdem Signale von einem Etiketten-Scanner 52 weitergeleitet, der in gewohnter Weise oberhalb des Zuführförderers 43 angeordnet ist, um an einer der Seiten der Stückgutteile angeordnete Etiketten mit Standardbarcodes zu lesen und entschlüsseln. Desweiteren ist die Sortiersteuerung 61 mit jeder Abschiebesteuerung 26 verbunden, die entlang des Hauptförderes 9 jedem Abzweigförderer 5 zugeordnet ist. Die elektrische Verbindung erfolgt über mindestens eine erste Leitung 54 mit einem Abschiebeelement-Erkennungssignal, einer zweiten Leitung 56 mit einer erstes Abschiebeelement-Anzeigesignal und einer dritten Leitung mit einem seriellen Zwei-Wege Informationssignal. Die Leitungen 54,56 und 58 werden durch die Abschiebesteuerungen 26 durchgeschleift. Daher sind die elektrischen Verbindungen entlang des Fördersystems 10, das beträchtliche Längen aufweisen kann, stark vereinfacht ausgebildet.

Jede Abschiebesteuerung 26 erhält ein weiteres Signal von einem Synchronisier-Sensor 60. Im Gegensatz zu dem Abschiebeelement-Sensor 48, der die vordere und hintere Kante jedes Abschiebeelements 14 erkennt, hat der Synchronisier-Sensor die Aufgabe, die in Förderrichtung F₁ gesehen führende Kante des Führungselementes 21, das vorzugsweise als Stift ausgebildet ist, zu erkennen, um den genauen Schaltzeitpunkt der Abschiebeweichen 25a und 25b zu bestimmen. Jede AbschiebeSteuerung 26 ist ausgangsseitig mit zwei Elektromagneten 62a und 62b verbunden, die zur Betätigung der Umschaltelemente der Abschiebeweichen 25a und 25b dienen. Zusätzlich erhält jede Abschiebesteuerung 26 ein Eingangssignal von einem Abzweigförderer-Sensor 64, der entlang des Abzweigförderers 50 angeordnet ist, um Meßsignale über den Füllungsgrad des Abzweigförderers 5 zu ermitteln. Im Betrieb überwacht die Sortiersteuerung 61 den Abschiebeelement-Sensor 48, den Stückgutteil-Sensor 45 und den inkrementalen Meßwertaufnehmer 63. Jedes Abschiebeelement 14 ist mit einer eigenen Abschiebeelementnummer versehen, die im Rahmen eines Kalibriervorganges des Fördersystems 10 im Zusammenhang mit einem Signal bezüglich der Erkennung des ersten Abschiebeelementes über die zweite Leitung 46 nach jedem Durchlauf von der gesamten Anzahl der Abschiebeelemente erfolgt. Ist das Förderssystem 10 einmalig in dieser Art abgeglichen, kann die Sortiersteuerung 61 die einzelnen Abschiebeelemente 14 anhand ihrer laufenden Nummer ansteuern. Für den Abschiebevorgang werden zu Beginn des Hauptförderers 9 die Längen der Stückgutteile 3 ermittelt, deren Identität vorzugsweise über den Etiketten-Scanner ermittelt und automatisch über die Sortiersteuerung 61 einem Abzweigförderer 5 als Ziel zugeordnet. Desweiteren wird zu diesem Stückgutteil 3 die Nummer des ersten seitlich an das Stückgutteil 3 anliegenden Abschiebeelementes 14 abgespeichert. Der als Ziel vorgesehene Abzweigförderer 5 kann auch manuell in die Sortiersteuerung 61 eingegeben werden. Jedes der von dem Zuführförderer 42 auf den Hauptförderer 9 aufgegebene Stückgutteile 3 wird entlang der Förderfläche 1 gefördert, bis dieses einen vorbestimmten Aktivierungspunkt für den Abschiebevorgang erreicht. An diesem Punkt wird von der Sortiersteuerung 61 bestimmt, welche Abschiebeelemente 14 - identifiziert durch ihre laufende Nummer- für den Abschiebevorgang des Stückgutteils 3 verwendet werden oder ob eine Abschiebung des Stückgutteils 3 nicht erfolgen kann, da der Abzweigförderer-Sensor 64 ein Belegt-Signal übermittelt. Im letzteren Fall wird das Stückgutteil 3 solange nicht abgeschoben bis der Abzweigförderer 5 beim nächsten Durchlauf des Stückgutteils 3 ausreichenden Raum für weitere Stückgutteile 3 aufweist.

Desweiteren weist die Sortiersteuerung 61 ein Steuerprogramm 65 auf, das die Eingangssignale des Stückgutteil-Sensors 45 verwendet, um die Länge der Stückgutteile 3 bei dem Programmschritt 66 zu bestimmen. Anschließend vergleicht das Steuerprogramm 65 die bestimmte Länge L des Stückgutteils 3 mit zwei vorbestimmten Längen A und B und gelangt im Ergebnis zu unterschiedlichen Ausgangssignalen (siehe Figur 5). Wenn im Programmschritt 68 ermittelt wurde, daß die Länge L des abzuschiebenden Stückgutteils 3 größer ist als die zweite im Programm vorbestimmte Länge B, sendet die Sortiersteuerung 61 eine Serie von Signalen über die dritte Leitung 58, um entsprechend dem Programmschritt 70 die Abschiebesteuerung 26 zu veranlassen, die zweite Abschiebeweiche 25a zu aktivieren. Die Abschiebesteuerung 26 erhält weiterhin den Befehl, die zweite Abschiebeweiche 25a nach einer ausreichenden Anzahl von umgeleiteter Abschiebeelementen 14 wieder in die Ruhestellung zurückzuschalten. Wenn in dem Programmschritt 68 bestimmt wurde, daß die Länge L der abzuschiebenden Stückgutteile 3 kürzer ist als die Länge B wird anschließend in einem Programmschritt 72 ermittelt, ob die Länge L kleiner ist als die erste vorbestimmte Länge A. Hierbei ist die vorbestimmte erste Länge A kleiner als die zweite vorbestimmte Länge B und nahezu gleich mit dem Abstand zwischen den Abschiebeweichen 25a und 25b. Wenn die Länge L der Stückgutteile geringer als die Länge A ist, sendet die Sortiersteuerung 61 über die dritte Leitung 58 Befehisdaten zu der Abschiebesteuerung 26, die zu einer Betätigung der zweiten Abschiebeweiche 25a unter dem Programmschritt 74 führt. Desweiteren erhält die Abschiebesteuerung 26 das Signal die zweite Abschiebeweiche 25a nach einer ausreichenden Anzahl von umgelenkten Abschiebeelementen 14 wieder in die Ruhestellung zurückzuschalten. Wenn in dem Programmschritt 74 die Länge L der Stückgutteile 3 größer als die erste vorbestimmte Länge A, dann wird in dem Programmschritt 76 festgestellt, daß die Länge L zwischen den Längen A und B liegt. In diesem Fall sendet die Sortiersteuerung 61 wiederum Daten über die dritte Leitung 58 zu der Abschiebesteuerung 26, die hierdurch veranlaßt wird, beide Abschiebeweichen 25a und 25b in Richtung der Abschiebeschienen 16 und 15 unter dem Programmschritt 78 umzuschalten. Die übermittelten Daten enthalten darüberhinaus Befehle an die Abschiebesteuerung 26, die Abschiebeweichen 25a und 25b wieder in die Ruhestellung zurückzuschalten, nachdem ein einziges Abschiebeelement 14 die jeweilige Abschiebeweiche 25a und 25 passiert hat. Im Programmschritt 80 erhält das Steuerprogramm 65 das Signal, das Programm für das nächste abzuschiebene Stückgutteil 3 fortzuführen.

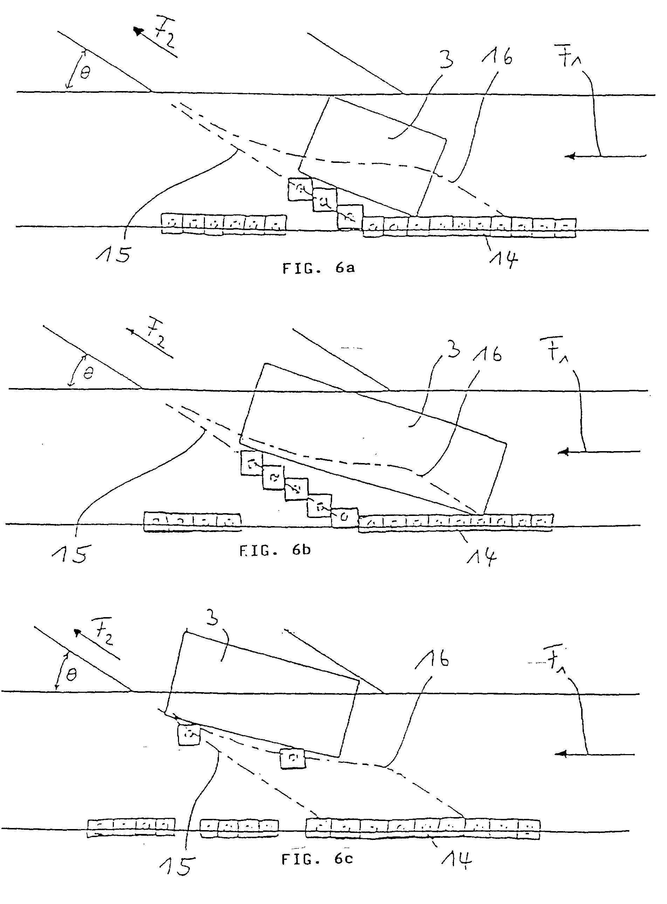

In den Figuren 6a-6c sind die zuvor in Figur 5 erläuterten drei möglichen Programmvarianten anhand von Beispielen dargestellt. In der Figur 6a weist das Stückgutteil eine Länge L auf, die kleiner ist als die erste vorbestimmte Länge A. Somit ist hier nur die zweite Abschiebeweiche 25a aktiviert worden, durch die eine der Länge L des Stückgutteils 3 entsprechende Menge von Abschiebeelementen 14 in Richtung der zweiten Abschiebeschiene 1 umgeleitet werden. Dieser Abschiebevorgang stimmt mit dem Programmschritt 74 in Figur 5 überein. Die Figur 6b zeigt ein abzuschiebendes Stückgutteil 3, das eine Länge L aufweist, das größer ist als die zweite vorbestimmte Länge B. Entsprechenderweise wird auch hier nur die in Förderrichung F₁ gesehen zweite Abschiebeweiche 25a aktiviert und die erforderliche Anzahl von Abschiebeelementen 14 auf die zweite Abschiebeschiene 15 umgeleitet. Dieser Abschiebevorgang entspricht dem Programmschritt 70 in Figur 5. In Figur 6c ist ein Stückgutteil mit einer Länge L zwischen den beiden vorbestimmten Längen A und B während des Abschiebevorgangs dargestellt. Für den Abschiebevorgang wurden von den Abschiebeweichen 25a und 25b jeweils nur ein Abschiebeelement 14 in die Abschiebeschienen 16 und 15 eingeleitet. Dieser Abschiebevorgang entspricht dem Programmschritt 78 in Figur 5.

In den Figuren 7 und 8 ist eine weitere Ausführungsform der vorliegenden Erfindung dargestellt, die das zuvor beschriebene Steuerprogramm 65 benutzt. Diese Ausführungsform weist keine erste Abschiebeschiene 11 auf, die in ihrem zweiten Abschnitt in Richung der zweiten Abschiebeschiene 20 gekrümmt ist. Die beiden Abschiebeschienen 11 und 20 verlaufen hier über die gesamte Breite der Förderfläche 1 parallel zueinander. Somit werden Stückgutteile 3 mit mittleren Längen zwar in gewohnter Weise mit jeweils nur einem Abschiebeelement 14 je Abschiebeschiene 11 und 20 abgeschoben, jedoch werden sie nicht vor Übergabe an den Abzweigförderer 15 verdreht. Der Figur 7 ist ein Stückgutteil mit einer Länge L, die zwischen den vorbestimmten ersten und zweiten Längen A und B liegt, während eines Abschiebevorgangs gezeigt. Dementsprechend ist jeweils ein Abschiebeelement 14a und 14b je Abschiebeschiene 11 und 19 von den Abschiebeweichen 25b und 25a ausgeschleust worden.

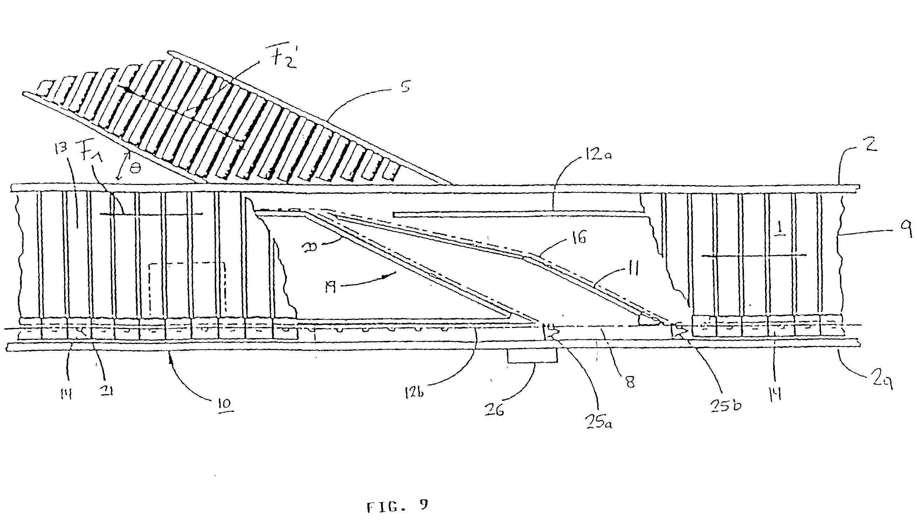

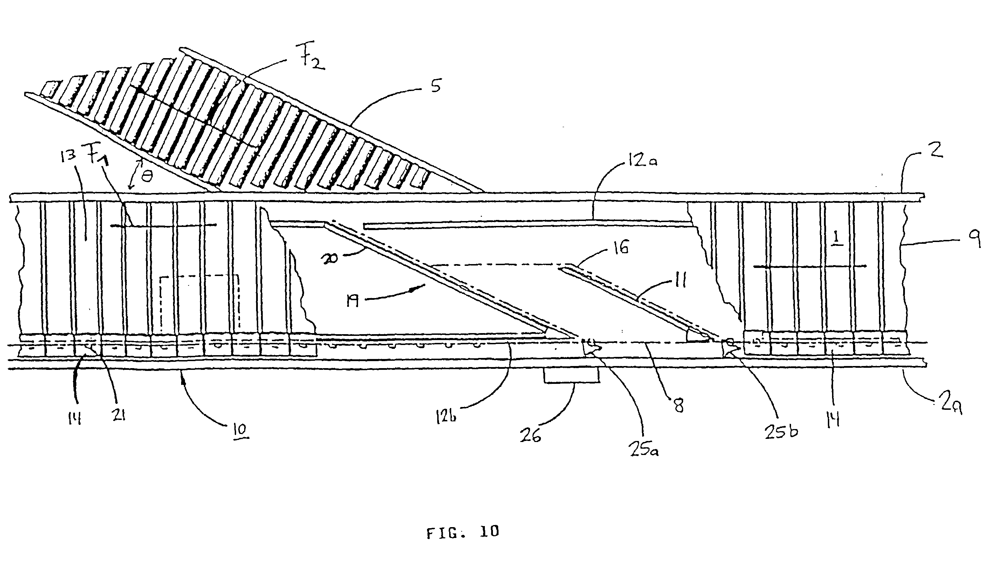

Weitere alternative Ausführungsformen der vorliegenden Erfindung sind in den Figuren 9 und 10 dargestellt, in denen das Fördersystem 10 im mittleren Bereich aufgebrochen dargestellt ist, um die darunterliegenden Bauteile sichtbar zu machen. Die Figur 9 zeigt eine erste Abschiebeschiene 9, die etwa in der Mitte der Förderfläche 1 um einen Winkel geknickt ist, so daß diese aus einem ersten und zweiten gerade ausgebildeten Abschnitt besteht. Der zweite Abschnitt läuft mit der zweiten Abschiebeschiene 20 zusammen. Diese Ausführungsform einer geknickten Abschiebeschiene 11 hat den Vorteil, daß diese leichter herzustellen ist als ein gekrümmt ausgebildeter zweiter Abschnitt der Abschiebeschiene 11. Durch die geknickte Ausbildung der Abschiebeschiene 11 bleibt jedoch der Vorteil erhalten, daß nach einer Zeitverzögerung das abzuschiebende Stückgutteil 3 in Richtung des Abzweigförderers 5 gedreht wird. Die Figur 10 zeigt eine erste Abschiebeschiene 11, die etwa in der Mitte der Förderfläche 1 des Hauptförderers 9 endet. Nach Verlassen dieser kurzen geraden Abschiebeschiene 11 wird das Führungselement 21 durch die Förderbewegung der Förderfläche 1 auf die zweite Abschiebeschiene 20 auftreffen und somit zu dem in Förderrichtung F₁ gesehen rechten Rand der Förderfläche 1 geleitet werden. Diese Ausführungsform verursacht auch eine Drehung des Stückgutteils 3 nach einer Zeitverzögerung, da das Abschiebeelement 14 auf der zweiten Abschiebeschiene 20 weiter in Richtung der Abzweigförderbahn 5 geführt wird, während das Abschiebeelement 14 der ersten kurzen ersten Abschiebeschiene stehenbleibt. Den beiden vorgenannten Ausführungsformen ist die Zeitverzögerung gleich mit der Zeit zu setzen, die das Abschiebeelement 14 benötigt, um entlang des ersten und parallel zu der zweiten Abschiebeschiene 15 verlaufenden Abschnitts der Abschiebeschiene 11 bewegt zu werden.

Desweiteren ist in Figur 11 ein einzelnes Stückgutteil 3 in verschiedenen Stufen eines Abschiebevorganges dargestellt. in dieser Ausführungsform verbleibt das Stückgutteil im wesentlichen parallel zur Förderrichung F₁ des Hauptförderers 9 ausgerichtet.

Die Figur 12 zeigt eine der Figur 11 ähnliche Darstellung für einen schematischen Ausschleusvorgang eines einzigen Stückgutteils 3, das jedoch nach einer Zeitverzögerung und einem parallel zur Förderrichtung F₁ verlaufenden Abschiebebeginn anschließend in Richtung eines Abzweigförderers 5 verdreht wird.

## Patentansprüche

1. Fördersystem für die Sortierung von Stückgut, insbesondere von Paketen, Päckchen oder Behältern, bestehend aus:
einer aus einer Vielzahl von in Förderrichtung (F₁) antreibbaren Förderflächenteilen (13) gebildeten Förderfläche (1) mit zwei Längsseiten, an den Förderflächenteilen (13) geführten Abschiebeelementen (14), die quer zur Förderrichtung (F₁) entlang der Förderflächenteile (13) von einer Längsseite der Förderfläche (1) zu der anderen verschiebbar sind,
einem an den Abschiebeelementen (14) angeordneten und sich von der Förderfläche (1) weg erstreckenden Führungselement (21), das zur Bewegung der Abschiebeelemente (14) entlang der Förderflächenteile (13) in Führungsschienen (12a,b) und Abschiebeschienen (11,15,16,20) geführt ist,
einer ersten Abschiebeweiche (25b) und einer in Förderrichtung (F₁,) folgenden zweiten Abschiebeweiche (25a), die im Verlauf der Führungsschienen (12a,b) und die Führungsschienen (12a,b) unterbrechend angeordnet sind sowie zwischen einer Ruheposition, in der das Führungselement (21) ununterbrochen entlang der Führungsschienen (12a,b) führbar ist, und einer Abschiebeposition, in der der Führungselement (21) aus der Führungsschiene (12a,b) ausschleusbar ist, schaltbar sind, und
einer sich an die erste Abschiebeweiche (25b) anschließenden ersten Abschiebeschiene (11,16) und einer an die zweite Abschiebeweiche (25a) anschließenden zweiten Abschiebeschiene (15,20), wobei die erste Abschiebeschiene (11,16) und die zweite Abschiebeschiene (15,20) derart zueinander ausgerichtet sind, daß die Stückgüter (3a-e) zunächst parallel zur Förderrichtung (F₁) und anschließend in Abschieberichtung (F₂) drehend abgeschoben werden.

2. Fördersystem nach Anspruch 1,
dadurch gekennzeichnet,
daß die erste Abschiebeschiene (11,16) einen ersten parallel zur zweiten Abschiebeschiene (15,20) verlaufenden Abschnitt und einen sich hieran anschließenden auf die zweite Abschiebeschiene (15) zulaufenden zweiten Abschnitt aufweist.

3. Fördersystem nach Anspruch 2,
dadurch gekennzeichnet,
daß der erste Abschnitt gerade und der zweite Abschnitt gekrümmt verläuft.

4. Fördersystem nach einem der Ansprüche 1 bis 3,
dadurch gekennzeichnet,
daß die zweite Abschiebeschiene (15,20) gerade verläuft.

5. Fördersystem nach einem der Ansprüche 1 bis 4,
dadurch gekennzeichnet,
daß die erste Abschiebeschiene (11,16) eine größere Länge als die zweite Abschiebeschiene (15,20) aufweist.

6. Fördersystem nach einem der Ansprüche 1 bis 5,
dadurch gekennzeichnet,
daß entlang der Förderfläche (1) Sensoren (45,48) angeordnet sind, die mit einem Steuersystem (43) verbunden sind, das anhand von Meßsignalen der Stückgutteil-Sensoren (45) die Länge der Stückgutteile (3a-e) ermittelbar sind, das Steuersystem (43) derart mit den Abschiebeweichen (25a,b) verbunden ist, daß beide Abschiebeweichen (25a,b) zum Abschieben eines Stückgutteils (3) in die Abschiebeposition geschaltet werden, wenn die Länge (L) des Stückgutteils (3) größer ist als eine erste vorbestimmte Länge (A) und kleiner ist als eine zweite vorbestimmte Länge (B), und daß ausschließlich die zweite der beiden Abschiebeweichen (25a) zum Abschieben eines Stückgutteils (3) in die Abschiebeposition geschaltet wird, wenn die Länge (L) des Stückgutteils (3) kleiner ist als eine erste vorbestimmte Länge (A) oder größer ist als eine zweite vorbestimmte Länge (B).

7. Fördersystem nach Anspruch 6,
dadurch gekennzeichnet,
daß beide Abschiebeweichen (25a,b) zum Abschieben eines Stückgutteils (3) aus der Abschiebeposition nach Einfahren je eines einzigen Abschiebeelementes (14a,b) in die Abschiebeschienen (11,15,16,20) zurück in Ruheposition schaltbar sind.

8. Fördersystem nach Anspruch 6,
dadurch gekennzeichnet,
daß die zweite der beiden Abschiebeweichen (25a) zum Abschieben eines Stückgutteils (3) aus der Abschiebeposition nach Einfahren je einer der Länge des Stückgutteils (L) entsprechenden Anzahl von Abschiebeelementen (14) in die Abschiebeschienen (11,15,16,20) zurück in Ruheposition schaltbar ist

9. Fördersystem nach einem der Ansprüche 1 bis 8,
dadurch gekennzeichnet,
daß die Förderflächenteile (13) quer zur Förderrichtung (F₁), in Förderrichtung (F₁) voneinander beabstandet und parallel zueinander angeordnet sind sowie eine endlos umlaufende Kette bilden, die Führungsschienen (12a,b) entlang der beiden Längsseiten der Förderfläche (1) und unterhalb der oberen Förderflächenteile (13) angeordnet sind, die Abschiebeschienen (15,16) in einem Abzweigwinkel (Θ) zu den Führungsschienen (12a,b) angeordnet sind und die gegenüberliegenden Führungsschienen (12a,b) miteinander verbinden.

10. Verfahren für die Sortierung von Stückgut, insbesondere von Paketen, Päckchen oder Behältern, die auf einem Fördersystem (10), insbesondere nach einem der Ansprüche 1 bis 9, mit einer aus einer Vielzahl von in Förderrichtung (F₁, F₂) antreibbaren, sich seitlich erstreckenden und parallel zueinander sowie voneinander beabstandet angeordneten Förderflächenteilen (13) gebildeten Förderfläche (1) förderbar und von an den Förderflächenteilen (13) geführten Abschiebeelementen (14) quer zur Förderrichtung (F₁) abschiebbar sind, mit den folgenden Schritten:
a) die Länge (L) der abzuschiebenden Stückgutteile (3a-e) wird gemessen,
b) die gemessen Länge (L) wird mit einer ersten und einer zweiten vorbestimmten Länge (A und B) verglichen, wobei die zweite Länge (B) größer als die erste Länge (A) ist,
c) die abzuschiebenden Stückgutteile (3a-e) werden über mindestens ein Abschiebeelement (14) mit einer schräg zur Förderrichtung (F₁) ausgerichteten Abschiebekraft und einer die Stückgutteile (3a-e) drehenden Kraftkomponente beaufschlagt, wenn die Länge (L) des abzuschiebenden Stückgutteils (3) kleiner ist als die erste vorbestimmte Länge (A) oder größer ist als die zweite vorbestimmte Länge (B) ist oder
d) die abzuschiebenden Stückgutteile (3a-e) werden über zwei in Förderrichtung (F₁) hintereinander angeordnete Abschiebeelemente (14a,b) mindestens zunächst mit einer ausschließlich schräg zur Förderrichtung (F₁) ausgerichteten Abschiebekraft beaufschlagt, wenn die Länge des abzuschiebenden Stückgutteils (3) größer ist als die erste vorbestimmte Länge (A) und kleiner ist als die zweite vorbestimmte Länge (B) ist.

11. Verfahren nach Anspruch 10,
dadurch gekennzeichnet,
daß die ausschließlich schräg zur Förderrichtung (F₁) ausgerichtete Abschiebekraft für eine vorbestimmte Zeit aufgebracht wird und anschließend die abzuschiebenden Stückgutteile (3a-e) durch eine drehende Kraftkomponente um einen vorbestimmten Winkel gedreht werden.

12. Verfahren für die Sortierung von Stückgut, insbesondere von Paketen, Päckchen oder Behältern, die auf einem Fördersystem (10), insbesondere nach einem der Ansprüche 1 bis 9, mit einer aus einer Vielzahl von in Förderrichtung (F₁, F₂) antreibbaren, sich seitlich erstreckenden und parallel zueinander sowie voneinander beabstandet angeordneten Förderflächenteilen (13) gebildeten Förderfläche (1) förderbar und von an den Förderflächenteilen (13) geführten Abschiebeelementen (14) quer zur Förderrichtung (F₁) abschiebbar sind, mit den folgenden Schritten:
a) die abzuschiebenden Stückgutteile (3a-e) werden über zwei in Förderrichtung (F₁) hintereinander angeordnete Abschiebeelemente (14a,b) zunächst mit einer ausschließlich schräg zur Förderrichtung (F₁) ausgerichteten Abschiebekraft beaufschlagt,
b) die schräg zur Förderrichtung (F₁) ausgerichtete Abschiebekraft wird für eine vorbestimmte Zeit aufgebracht und
c) nach Ablauf der vorbestimmten Zeit wird die schräg zur Förderrichtung (F₁) wirkende Abschiebekraft mit einer die Stückgutteile (3a-e) drehenden Kraftkomponente überlagert.

13. Verfahren nach einem der Ansprüche 10 bis 12,
dadurch gekennzeichnet,
daß die abzuschiebenden Stückgutteile (3a-e) durch die drehende Kraftkomponente um einen vorbestimmten Winkel gedreht werden.

14. Verfahren nach Anspruch 11 oder 13,
dadurch gekennzeichnet,
daß der vorbestimmte Winkel einem Abzweigwinkel (Θ) entspricht, der von der Förderrichtung (F₁) und einer Förderrichtung (F₂) eines an das Fördersystem (10) sich seitlich anschließenden Abzweigförderers (5) für die Aufnahme der abgeschobenen Stückgutteile (3a-e) eingeschlossen ist.

## Claims

1. Conveyor system for sorting individual articles, especially parcels, packages or containers, consisting of:
a conveyor surface (1) with two longitudinal sides which is formed from a plurality of conveyor surface parts (13), which can be driven in the conveying direction (F₁), push-off elements (14), which are guided on the conveyor surface parts (13) and can be displaced transversely to the conveying direction (F₁) along the conveyor surface parts (13) from one longitudinal side of the conveyor surface (1) to the other,
a guide element (21), which is disposed on the push-off elements (14), extends away from the conveyor surface (1) and is guided in guide rails (12a, b) and push-off rails (11, 15, 16, 20) to move the push-off elements (14) along the conveyor surface parts (13),
a first set of push-off points (25b) and a second set of push-off points (25a), which follows in the conveying direction (F₁), which sets are disposed in interrupting fashion in the path of the guide rails (12a, b) and can be switched over between a neutral position, in which the guide element (21) can be guided without interruption along the guide rails (12a, b), and a push-off position, in which the guide element (21) can be transferred out of the guide rail (12a, b), and
a first push-off rail (11, 16), which adjoins the first set of push-off points (25b), and a second push-off rail (15, 20), which adjoins the second set of push-off points (25a), wherein the first push-off rail (11, 16) and the second
push-off rail (15, 20) are oriented relative to one another such that the individual articles (3a-e) are firstly pushed off parallel to the conveying direction (F₁) and then in rotating fashion in the push-off direction (F₂).

2. Conveyor system according to Claim 1,
characterised in that the first push-off rail (11, 16) comprises a first portion extending parallel to the second
push-off rail (15, 20) and a second portion adjoining the first portion and running up to the second push-off rail (15).

3. Conveyor system according to Claim 2,
characterised in that the first portion extends in a straight fashion and the second portion in a curved fashion.

4. Conveyor system according to any one of Claims 1 to 3,
characterised in that the second push-off rail (15, 20) extends in a straight fashion.

5. Conveyor system according to any one of Claims 1 to 4,
characterised in that the first push-off rail (11, 16) is longer than the second push-off rail (15, 20).

6. Conveyor system according to any one of Claims 1 to 5,
characterised in that sensors (45, 48) are disposed along the conveyor surface (1) and connected to a control system (43), that the length of the individual articles (3a - e) can be established on the basis of measuring signals from the individual article sensors (45), the control system (43) is connected to the sets of push-off points (25a, b) such that both sets of push-off points (25a, b) are switched into the push-off position to push off an individual article (3) if the length (L) of the individual article (3) is greater than a first predetermined length (A) and less than a second predetermined length (B), and that only the second of the two sets of push-off points (25a) is switched into the push-off position to push off an individual article (3) if the length (L) of the individual article (3) is less than a first predetermined length (A) or greater than a second predetermined length (B).

7. Conveyor system according to Claim 6,
characterised in that both sets of points (25a, b) for pushing off an individual article can be switched back from the push-off position into the neutral position after a respective individual push-off element (14a, b) has moved into the push-off rails (11, 15, 16, 20).

8. Conveyor system according to Claim 6,
characterised in that the second of the two sets of push-off points (25a) for pushing off an individual article (3) can be switched back from the push-off position into the neutral position after a respective number of push-off elements (14) corresponding to the length (L) of the individual article have moved into the push-off rails (11, 15, 16, 20).

9. Conveyor system according to any one of Claims 1 to 8,
characterised in that, considered transversely to the conveying direction (F₁), the conveyor surface parts (13) are disposed at a spacing from and parallel to one another in the conveying direction (F₁) and form a continuously circulating chain, the guide rails (12a, b) are disposed along the two longitudinal sides of the conveyor surface (1) and below the upper conveyor surface parts (13), the push-off rails (15, 16) are disposed at a branch-off angle (Θ) to the guide rails (12a, b) and connect together the opposite guide rails (12a, b).

10. Method for sorting individual articles, especially parcels, packages or containers, which can be conveyed on a conveyor system (10), especially according to any one of Claims 1 to 9, with a conveyor surface (1) which is formed from a plurality of conveyor surface parts (13), which can be driven in the conveying direction (F₁, F₂), extend laterally and are disposed parallel to and at a spacing from one another, which articles can be pushed off transversely to the conveying direction (F₁) by push-off elements (14) guided on the conveyor surface parts (13), comprising the following steps:
a) the length (L) of the individual articles (3a - e) to be pushed off is measured,
b) the measured length (L) is compared with a first and a second predetermined length (A and B), wherein the second length (B) is greater than the first length (A),
c) the individual articles (3a - e) to be pushed off are subjected via at least one push-off element (14) to a push-off force which is oriented obliquely to the conveying direction (F₁) and a force component which rotates the individual articles (3a - e) if the length (L) of the individual article (3) to be pushed off is less than the first predetermined length (A) or greater than the second predetermined length (B) or
d) the individual articles (3a - e) to be pushed off are subjected via two push-off elements (14a, b), disposed one behind the other in the conveying direction (F₁), at least initially to a push-off force which is oriented solely obliquely to the conveying direction (F₁) if the length of the individual article (3) to be pushed off is greater than the first predetermined length (A) and less than the second predetermined length (B).

11. Method according to Claim 10,
characterised in that the push-off force which is oriented solely obliquely to the conveying direction (F₁) is applied for a predetermined time and the individual articles (3a - e) to be pushed off are rotated through a predetermined angle by a rotating force component.

12. Method for sorting individual articles, especially parcels, packages or containers, which can be conveyed on a conveyor system (10), especially according to any one of Claims 1 to 9, with a conveyor surface (1) formed from a plurality of conveyor surface parts (13), which can be driven in the conveying direction (F₁, F₂), extend laterally and are disposed parallel to and at a spacing from one another, which articles can be pushed off transversely to the conveying direction (F₁) by push-off elements (14) guided on the conveyor surface parts (13), comprising the following steps:
a) the individual articles (3a - e) to be pushed off are subjected via two push-off elements (14a, b), disposed one behind the other in the conveying direction (F₁), initially to a push-off force which is oriented solely obliquely to the conveying direction (F₁),
b) the push-off force which is oriented obliquely to the conveying direction (F₁) is applied for a predetermined time and
c) at the end of the predetermined time a force component which rotates the individual articles (3a- e) is superimposed on the push-off force acting obliquely to the conveying direction (F₁).

13. Method according to any one of Claims 10 to 12,
characterised in that the individual articles (3a - e) to be pushed off are rotated through a predetermined angle by the rotating force component.

14. Method according to Claim 11 or 13,
characterised in that the predetermined angle corresponds to a branch-off angle (Θ) which is formed by the conveying direction (F₁) and a conveying direction (F₂) of a branch conveyor (5), which adjoins the conveyor system (10) at the side, for taking up the individual articles (3a - e) which have been pushed off.

## Revendications

1. Système de transport pour le triage de marchandises de détail, en particulier de paquets, colis ou récipients, constitué de :
- une surface de transport (1), formée d'une pluralité de parties (13) de surface de transport pouvant être entraînées dans la direction de transport (F₁), ayant deux côtés longitudinaux,
- des éléments de séparation (14) guidés sur les parties de surface de transport (13), qui sont déplaçables transversalement à la direction de transport (F₁) le long des parties de surface de transport (13) d'un côté longitudinal de la surface de transport (1) vers l'autre,
- un élément de guidage (21) agencé sur les éléments de séparation (14) et s'étendant au loin de la surface de transport (1), élément qui, pour le déplacement des éléments de séparation (14) le long des parties de surface de transport (13), est guidé dans des rails de guidage (12a, b) et des rails de séparation (11, 15, 16, 20),
- un premier aiguillage de séparation (25b) et un second aiguillage de séparation (25a) suivant dans la direction de transport (F₁), qui sont agencés dans le cours des rails de guidage (12a, b) et interrompant les rails de guidage (12a, b), et peuvent être commutés entre une position de repos, dans laquelle l'élément de guidage (21) peut être guidé de façon ininterrompue le long des rails de guidage (12a, b), et une position de séparation, dans laquelle l'élément de guidage (21) peut être séparé du rail de guidage (12a, b), et
- un premier rail de séparation (11, 16) se raccordant au premier aiguillage de séparation (25b) et un second rail de séparation (15, 20) se raccordant au second aiguillage de séparation (25a), le premier rail de séparation (11, 16) et le second rail de séparation (15, 20) étant orientés l'un par rapport à l'autre de sorte que les marchandises (3a - e) sont séparées tout d'abord parallèlement à la direction de transport (F₁) et, ensuite, en tournant dans la direction de séparation (F₂).

2. Système de transport selon la revendication 1,
caractérisé en ce que le premier rail de séparation (11, 16) présente un premier tronçon s'étendant parallèlement au second rail de séparation (15, 20) et un second tronçon s'y raccordant arrivant sur le second rail de séparation (15).

3. Système de transport selon la revendication 2,
caractérisé en ce que le premier tronçon s'étend de façon rectiligne et le second tronçon de façon cintrée.

4. Système de transport selon une des revendications 1 à 3,
caractérisé en ce que le second rail de séparation (15, 20) s'étend de façon rectiligne.

5. Système de transport selon une des revendications 1 à 4,
caractérisé en ce que le premier rail de séparation (11, 16) présente une longueur plus grande que le second rail de séparation (15, 20).

6. Système de transport selon une des revendications 1 à 5,
caractérisé en ce que, le long de la surface de transport (1), sont agencés des capteurs (45, 48), qui sont reliés à un système de commande (43) qui, en référence à des signaux de mesure des capteurs de marchandises (45), peut déterminer la longueur des marchandises (3a - e), le système de commande (43) étant relié aux aiguillages de séparation (25a, b) de sorte que les deux aiguillages de séparation (25a, b), pour séparer une marchandise (3), sont commutés dans la position de séparation lorsque la longueur (L) de la marchandise (3) est plus grande qu'une première longueur prédéterminée (A) et plus petite qu'une seconde longueur prédéterminée (B), et qu'exclusivement le second des deux aiguillages de séparation (25a), pour séparer une marchandise (3), est commuté dans la position de séparation lorsque la longueur (L) de la marchandise (3) est plus petite qu'une première longueur prédéterminée (A) ou plus grande qu'une seconde longueur prédéterminée (B).

7. Système de transport selon la revendication 6,
caractérisé en ce que les deux aiguillages de séparation (25a, b) pour séparer une marchandise (3) peuvent être à nouveau commutés dans la position de repos à partir de la position de séparation après entrée, à chaque fois, d'un élément de séparation unique (14a, b) dans les rails de séparation (11, 15, 16, 20).

8. Système de transport selon la revendication 6,
caractérisé en ce que le second des deux aiguillages de séparation (25a) pour séparer une marchandise (3) peut être à nouveau commuté dans la position de repos à partir de la position de séparation après entrée, à chaque fois, d'un nombre, correspondant à la longueur de la marchandise (L), d'éléments de séparation (14) dans les rails de séparation (11, 15, 16, 20).

9. Système de transport selon une des revendications 1 à 8,
caractérisé en ce que les parties de surface de transport (13) sont agencées transversalement à la direction de transport (F₁), de façon écartée l'une de l'autre dans la direction de transport (F₁) et parallèlement l'une à l'autre, et forment une chaîne tournant sans fin, les rails de guidage (12a, b) sont agencés le long des deux côtés longitudinaux de la surface de transport (1) et au-dessous des parties supérieures (13) de la surface de transport, les rails de séparation (15, 16) sont agencés sous un angle de dérivation (θ) par rapport aux rails de guidage (12a, b), et relient ensemble les rails de guidage opposés (12a, b).

10. Procédé pour le triage de marchandises de détail, en particulier de paquets, colis ou récipients, qui peuvent être transportées sur un système de transport (10), en particulier selon une des revendications 1 à 9, comportant une surface de transport (1) formée d'une pluralité de parties de surface de transport (13) pouvant être entraînées dans la direction de transport (F₁, F₂), s'étendant latéralement, et agencées parallèlement l'une à l'autre et de façon écartée l'une de l'autre, et peuvent être séparées, par des éléments de séparation (14) guidés sur les parties de surface de transport (13), transversalement à la direction de transport (F₁), comportant les étapes suivantes :
a) la longueur (L) des marchandises à séparer (3a - e) est mesurée,
b) la longueur mesurée (L) est comparée à des première et seconde longueurs prédéterminées (A et B), la seconde longueur (B) étant plus grande que la première longueur (A),
c) les marchandises à séparer (3a - e) sont sollicitées, par l'intermédiaire d'au moins un élément de séparation (14), par une force de séparation orientée de façon inclinée par rapport à la direction de transport (F₁) et une composante de force faisant tourner les marchandises (3a - e), lorsque la longueur (L) de la marchandise à séparer (3) est plus petite que la première longueur prédéterminée (A) ou plus grande que la seconde longueur prédéterminée (B), ou
d) les marchandises à séparer (3a - e) sont sollicitées, par l'intermédiaire de deux éléments de séparation (14a, b) agencés l'un derrière l'autre dans la direction de transport (F₁), au moins tout d'abord par une force de séparation orientée exclusivement de façon inclinée par rapport à la direction de transport (F₁), lorsque la longueur de la marchandise à séparer (3) est plus grande que la première longueur prédéterminée (A) et plus petite que la seconde longueur prédéterminée (B).

11. Procédé selon la revendication 10,
caractérisé en ce que la force de séparation orientée exclusivement de façon inclinée par rapport à la direction de transport (F₁) est appliquée pendant une durée prédéterminée et, ensuite, les marchandises à séparer (3a -
e) sont tournées par une composante de force de rotation d'un angle prédéterminé.

12. Procédé pour le triage de marchandises de détail, en particulier de paquets, colis ou récipients, qui peuvent être transportées sur un système de transport (10), en particulier selon une des revendications 1 à 9, comportant une surface de transport (1) formée d'une pluralité de parties de surface de transport (13) pouvant être entraînées dans la direction de transport (F₁, F₂), s'étendant latéralement, et agencées parallèlement l'une à l'autre et de façon écartée l'une de l'autre, et peuvent être séparées, par des éléments de séparation (14) guidés sur les parties de surface de transport (13), transversalement à la direction de transport (F₁), comportant les étapes suivantes :
a) les marchandises à séparer (3a - e) sont sollicitées, par l'intermédiaire de deux éléments de séparation (14a, b) agencés l'un derrière l'autre dans la direction de transport (F₁), tout d'abord par une force de séparation orientée exclusivement de façon inclinée par rapport à la direction de transport (F₁),
b) la force de séparation orientée de façon inclinée par rapport à la direction de transport (F₁) est appliquée pendant une durée prédéterminée, et
c) après écoulement de la durée prédéterminée, la force de séparation agissant de façon inclinée par rapport à la direction de transport (F₁) est superposée à une composante de force faisant tourner les marchandises (3a - e).

13. Procédé selon une des revendications 10 à 12,
caractérisé en ce que les marchandises à séparer (3a - e) sont tournées par la composante de force de rotation d'un angle prédéterminé.

14. Procédé selon la revendication 11 ou 13,
caractérisé en ce que l'angle prédéterminé correspond à un angle de dérivation (θ), qui est formé par la direction de transport (F₁) et une direction de transport (F₂) d'un transporteur de dérivation (5), se raccordant latéralement au système de transport (10), pour la réception des marchandises séparées (3a - e).
